# EUROPEAN PATENT SPECIFICATION

(11) **EP 0 413 321 B1**
(45) Date of publication and mention of the grant of the patent: **21.06.1995**
(21) Application number: 90115615.8
(22) Date of filing: 16.08.1990
(51) Int. Cl.: C04B 35/00, H01G 4/12

(54) **Dielectric ceramic composition and multi-layer capacitor**
Dielektrische Keramikzusammensetzung und Vielschicht-Kondensator
Composition céramique diélectrique et condensateur à couche multiple

(30) Priority: 17.08.1989 JP 211594/89; 26.02.1990 JP 44913/90; 26.02.1990 JP 449912/90
(43) Date of publication of application: 20.02.1991
(73) Proprietor: MATSUSHITA ELECTRIC INDUSTRIAL CO., LTD., Kadoma-shi, Osaka-fu, 571 (JP)
(72) Inventor: Kagata, Hiroshi, Katano-shi, Osaka-fu (JP); Kato, Junichi, Osaka-shi, Osaka-fu (JP); Yokotani, Youichiro, Suita-shi, Osaka-fu (JP); Kugimiya, Koichi, Toyonaka-shi, Osaka-fu (JP)
(74) Representative: Eisenführ, Speiser & Partner

(56) References cited:
- EP-A- 0 238 241
- DE-A- 3 541 517
- US-A- 4 753 905
- CHEMICAL ABSTRACTS, vol. 107, no. 18, November 1987 Columbus, Ohio, USA J.IMANARI et al.: "Dielectric ceramic composition" page 868; left-hand column; ref. no. 16105C & JP-A-6237804
- CHEMICAL ABSTRACTS, vol. 108, no. 6, February 1988 Columbus, Ohio, USA H.TAMURA: "Dielectric ceramic composition for high-frequency use" page 671; right-hand column; ref. no. 47724C & JP-A-A62115817

## Description

This invention relates to a dielectric ceramic composition for a multi-layer capacitor comprising internal electrodes mainly containing Cu or Cu alloys and dielectric layers mainly containing Pb based perovskite ceramics; it paticularly relates to a composition having a small temparature coefficient of capacitance which is in the range of the Y-class B-characteristics of the JIS (Japanese Industrial Standard ) and which has a temperature change ratio variation from -25°C to 85°C within ±10% based on a value of 20°C.

Recently, multi-layer capacitors have been mainly used in the electric circuits of various electric products to meet the need for small-sized and large-capacitance capacitors. Such multi-layer capacitors are usually made by co-sintering internal electrodes and a dielectric ceramic body. Conventionally, a ceramic composition comprising a barium titanate system is widely used as a dielectric material for a ceramic capacitor having a high dielectric constant. However, since such barium titanate ceramics are sintered at a temparature as high as about 1300°C, it is required to use metals such as Pd, Pt and the like which have a high cost and a high electric resistance, for internal electrodes of multi-layer capacitors. Further, owing to the inferiority in DC bias and signal voltage characteristics, dielectric layers of barium titanate ceramics can not get thinner in order to make a capacitor small-sized and having a large capacitance.

Therefore, there is now strongly requested a multi-layer capacitor comprising internal electrodes made of Cu being of low costs and having a low electric resistance and of dielectric layers made of Pb based perovskite ceramics having a good voltage characteristic and a low sintering temparature. We have also proposed a dielectric ceramic composition which has practical electric characteristics and is able to be sintered together with Cu, that is, sintered at a condition in which Cu can not be melted and not be oxydized. Furthermore, we have proposed a method by which the above multi-layer capacitor can be mass-produced. Therefore, the multi-layer capacitor comes to be of good commercial costs and to have larger capacitance although it is small-sized, so that electrolytic capacitors can be replaced by the multi-layer capacitors.

However, the multi-layer capacitor proposed up to the present time has poorer characteristics referring to the temparature coefficient of capacitance (corresponding to JIS Y E characteristics), so that the thus produced capacitor can be used only to a limited extent. Therefore, it is desired to develop a superior capacitor that has a large capacitance which meets the above Y B-characteristics, i.e. has a temparature change ratio from -25°C to 85°C within ±10% based on a value of 20°C. However, there has not yet been devoloped a capacitor having a practical level in CR product, voltage characteristic and the like.

Therefore, the first object of the present invention is to provide a dielectric ceramic composition for multi-layer capacitors which meet the above requirements.

Further, the second object of the present invention is to provide a multi-layer capacitor which meet the above requirements.

These objects are attained by a dielectric ceramic composition as defined in claim 1 and a multi layer ceramic capacitor as defined in claim 3.

In accordance with this invention, there is provided a dielectric ceramic composition essentially consisting of one or more substances selected from those represented by the following formulas:

(1) Pb₁₋ₓ₊ₐMeₓ{(Zn_{1/3}Nb_{2/3})_{1-y-z}Ti_{y}(Cu_{b}Nb_{1-b})_{z}}O₃₊ₐ

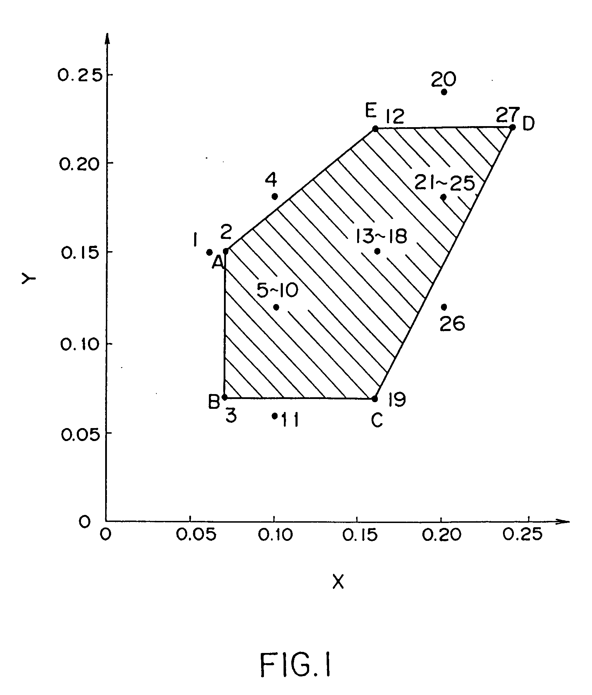

wherein Me is at least one element selected from Sr and Ba; x and y are in the scope enclosed by 5 points A(x=0.07, y=0.15), B(x=0.07, y=0.07), C(x=0.16, y=0.07), D(x=0.24, y=0.22) and E(x=0.16, y=0.22); and O≦a≦0.1, 0.02≦b≦1.0, 0.002≦bz≦0.04 as shown in Fig.1;

(2) Pb₁₋ₓ₊ₐMeₓ{(Zn_{1/3}Nb_{2/3})_{1-y-z}Ti_{y}(Cu_{b}Ta_{1-b})_{z}}O₃₊ₐ

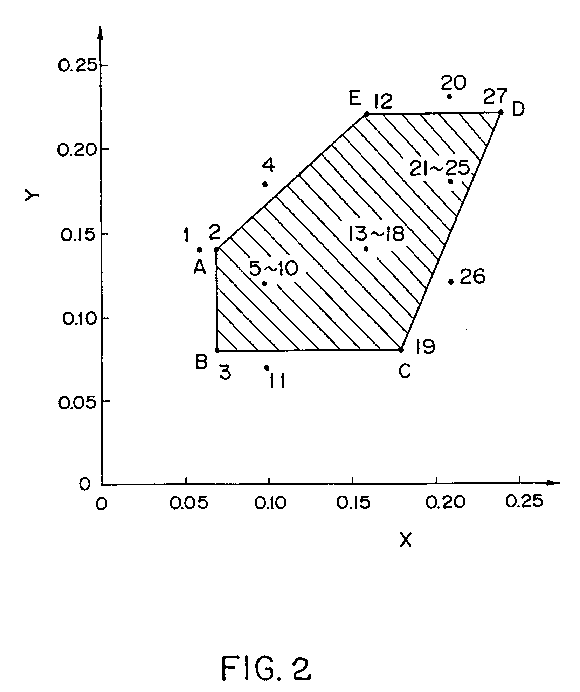

wherein Me is at least one element selected from Sr and Ba; x and y is in the scope enclosed by 5 points A(x=0.07, y=0.14), B(x=0.07, y=0.08), C(x=0.18, y=0.08), D(x=0.24, y=0.22) and E(x=0.16, y=0.22); and O≦a≦0.1, 0.02≦b≦1.0, 0.002≦bz≦0.04 as shown in Fig.2;

(3) Pb₁₋ₓ₊ₐMeₓ{(Zn_{1/3}Nb_{2/3})_{1-y-z}Ti_{y}(Cu_{b}W_{1-b})_{z}}O₃₊ₐ

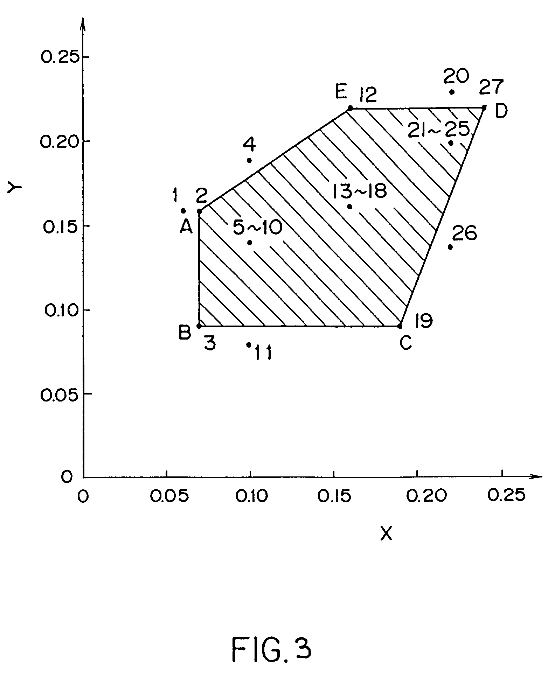

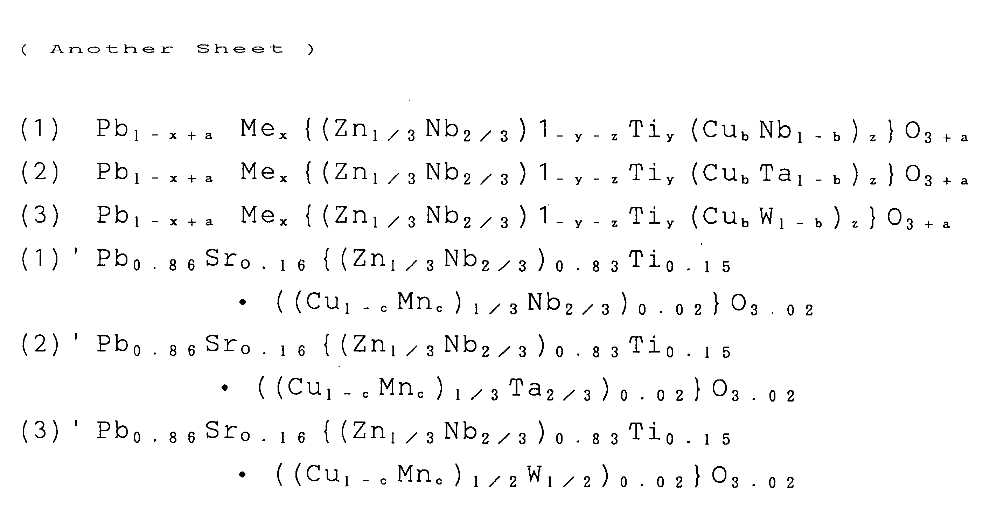

wherein Me is at least one element selected from Sr and Ba; x and y are in the scope enclosed by 5 points A(x=0.07, y=0.16), B(x=0.07, y=0.09), C(x=0.19, y=0.09), D(x=0.24, y=0.22) and E(x=0.16, y=0.22); and O≦a≦0.1, 0.02≦b≦1.0, 0.002≦bz≦0.04 as shown in Fig.3;

In the dielectric ceramic composition according to the invention, it is preferred that at most 85% of the Cu atoms included therein are substituted by Mn atoms, since the absolute insulation resistivity is increased.

According to the above inventive dielectric ceramic composition, the amount of A site in the perovskite phase represented by the formula ABO₃ is over the stoichiometric amount, so that the insulation resistivity is not lowered even if the composition has been sintered under a low oxygen partial pressure. Futhermore, the B site of the perovskite phase contains Cu, so that the composition can be sintered at a lower temparature and becomes to have a small temparature coefficient of dielectric constant.

In accordance with this invention, therefore, there is also provided a multi-layer capacitor comprising dielectric ceramic layers essentially consisting of one or more substances selected from those represented by the above formulas (1), (2) and (3).

Fig.1 is a composition diagram of

(1) Pb₁₋ₓ₊ₐMeₓ{(Zn_{1/3}Nb_{2/3})1_{-y-z}Ti_{y}(Cu_{b}Nb_{1-b})_{z}}O₃₊ₐ

in accordance with the present invention.

Fig.2 is a composition diagram of

(2) Pb₁₋ₓ₊ₐMeₓ{(Zn_{1/3}Nb_{2/3})1_{-y-z}Ti_{y}(Cu_{b}Ta_{1-b})_{z}}O₃₊ₐ

in accordance with the present invention.

Fig.3 is a composition diagram of

(3) Pb₁₋ₓ₊ₐMeₓ{(Zn_{1/3}Nb_{2/3})1_{-y-z}Ti_{y}(Cu_{b}W_{1-b})_{z}}O₃₊ₐ

in accordance with the present invention.

The composition herein may be prepared in accordance with various well-known ceramic procedures.

### EXAMPLE 1

A multi-layer ceramic capacitor which meets the JIS Y-class B-characteristics with respect to the capacitance variation depending on temparature changes (a temparature coeffieient of capacitance) was prepared according to the following method.

The starting materials, viz. lead oxide (PbO), strontium carbonate (SrCO₃), barium carbonate (BaCO₃), zinc oxide (ZnO), niobium oxide (Nb₂O₅), titanium oxide (TiO₂) and copper oxide (CuO), all chemically pure grade, were used. After compensated as to pure contents, they were weighted out to compose a substance represented by the following formula:

(1) Pb₁₋ₓ₊ₐMeₓ{(Zn_{1/3}Nb_{2/3})1_{-y-z}Ti_{y}(Cu_{b}Nb_{1-b})_{z}}O₃₊ₐ

wherein Me is at least one element selected from Sr and Ba; x, y, z, a and b may be optional values.

They were mixed in a ball mill with zirconia 4mm∅ balls and with distilled water for 17 hours. Thereafter, the mixture was dried and charged into a crucible made of alumina which is closed by an alumina lid and then calcined at 750∼900°C. The calcined mixture was crushed and ground in a ball mill for 17 hours by using the same solvent and balls as the above.

To the sufficiently dried dielectric powder, 5 wt% of polyvinyl butylal resin with 70 wt% of a solvent based on the dielectric powder weight was added and mixed in a ball mill. The resulting mixture was brought into a sheet form by a docter- blade method.

Cu₂O powder having an average particle size of 0.8»m was mixed with 0.5 wt% of ethylcellose and 25 wt% of a solvent based on the Cu₂O weight to obtain an electrode paste. The paste was printed on the dielectric sheet by means of screen printing. The printed sheet was laminated and then was cut into a predetermined size. The number of dielectric layers was set to 20.

The laminated body thus obtained was heated for 6 hours at 500°C, and organic components were burned out. Thereafter, the laminated body was heated in a N₂ gas flow containing 1% of H₂ for 8 hours at 450°C and the internal electrode thereof was reduced.

Sintering was carried out by charging the laminated body into a magnesia vessel together with a large volume of the calcinated dielectric powder and also controlling the oxygen partial pressure in a atmosphere so that the internal electrode could not be oxydized absolutely by gas supply of CO₂, CO, H₂, O₂, N₂ and the like and then maintaining a predetermined temparature for 2 hours. As the sintering temparature is varied depending on the composition of a calcinated dielectric powder, it is prefered to choose a temparature in which the largest density can be obtained when the pressed body is fired at various temperature.

500 pieces of ceramic body were produced in one sintering process. On the ends of the resulting ceramic bodies, Cu paste was baked to form an external electrode to form a multi-layer capacitor.

The size of the multi-layers capacitor is 3.2 × 1.6 × 0.9mm, the thickness of the electrode layers is about 2»m and each thickness of the dielectric layers is about 20»m.

The capacitance and tanδ (the dielectric loss) of the multi-layer capacitor were measured under the conditions of 1V and 1kHz. The insulated resistivity was measured after one minute with 20V being applied. The effective area of the electrode and the thickness of the dielectric layer were measured after polishing the capacitor and then the dielectric constant and the insulation resistivity of the dielectric layer were calculated. Each of the properties was recorded as an average value of good samples.

In the Table 1 below, there are shown: x, y, z, a and b values of the dielectric composition; optimum sintering temparature; dielectric constant of the dielectric layer at 20°C; tanδ ; resistivity; and temparature change ratio of the dielectric constant.

As shown in the Table 1, the compositions outside the polygon A,B,C,D,E scope shown in Fig.1 were not suitable for ceramic capacitor materials since they lack at least one property of (1) a sintering temparature of below 1000°C, (2) a dielectric constant of above 2000, (3) a resistivity of above 10⁺¹²Ω cm and (4) a temparature change ratio of capacitance meeting the YB characteristics of the JIS. Thus, the comparative compositions are excluded from the scope of the present invention.

It is also taught by the data in the Table 1 that the sintering temparature can be lowered and the insulation resistivity can be increased by providing an excess content (a) of the A site of more than zero in the perovskite phase represented by the formula A₁₊ₐBO₃ of the dielectric layer.

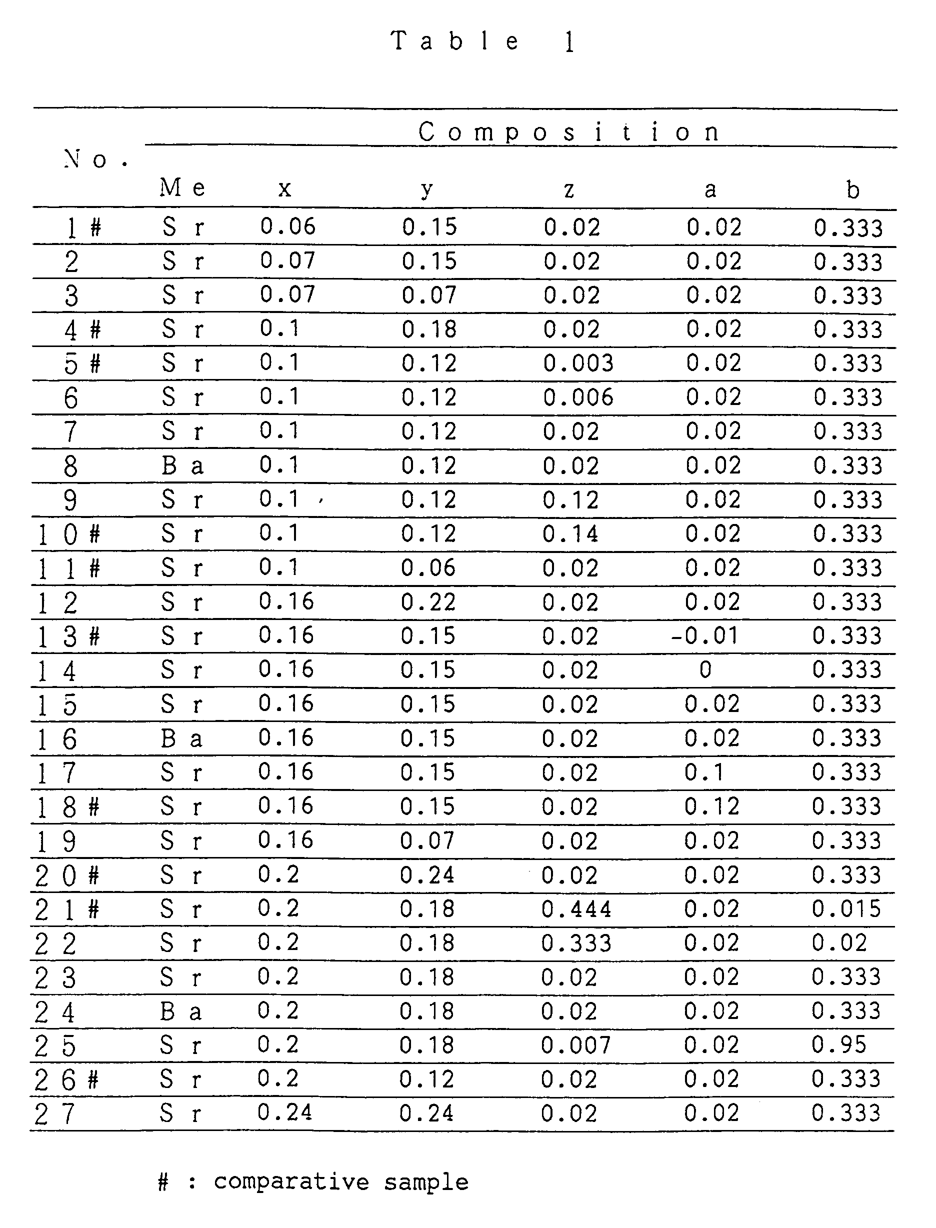

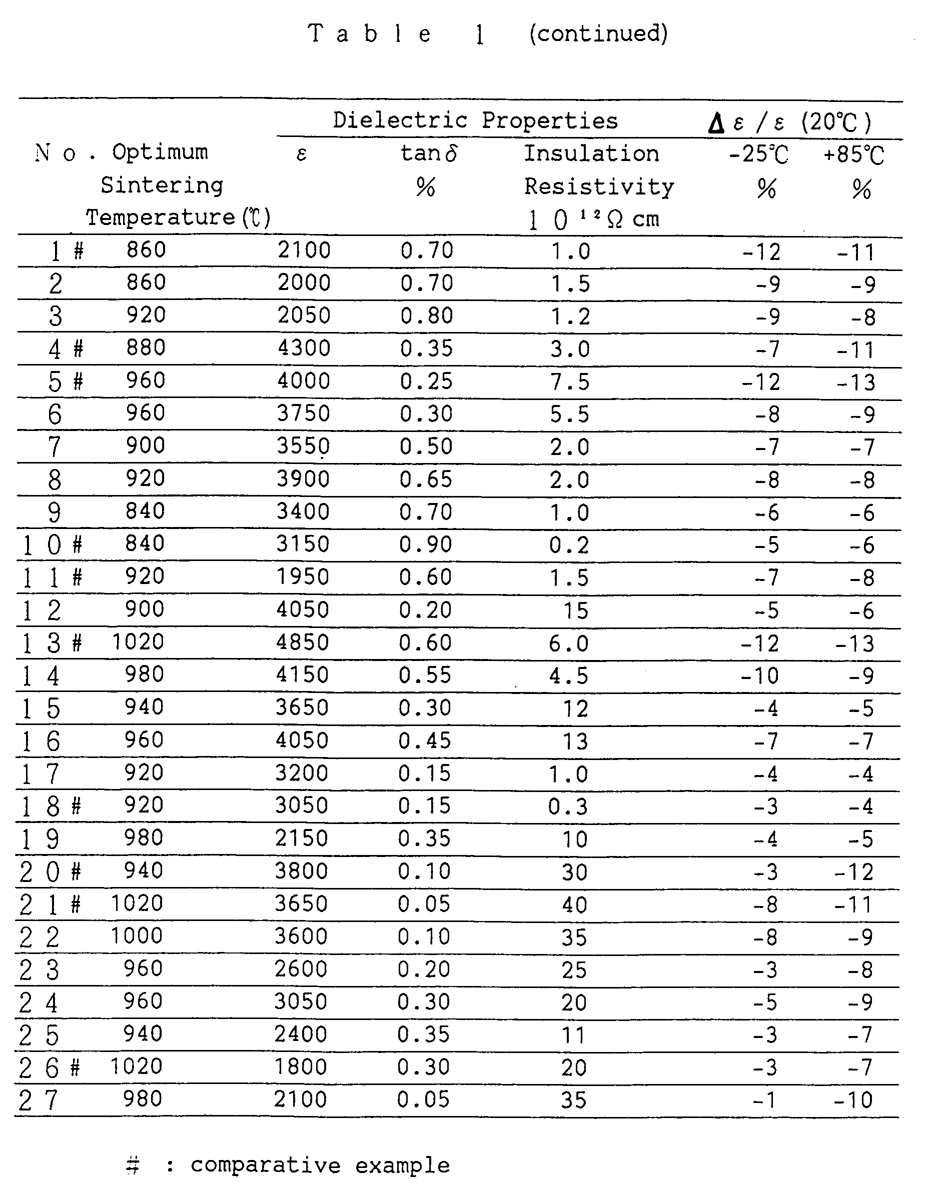

### EXAMPLE 2

The composition herein is characterized in that part of the Cu component in the perovskite of the dielectric layer was substituted by Mn.

A dielectric powder was prepared to have a composition represented by the following formula:

(1)' Pb_{0.86}Sr_{O.16}{(Zn_{1/3}Nb_{2/3})_{0.83}Ti_{0.15} · ((Cu_{1-c}Mn_{c})_{1/3}Nb_{2/3})_{0.02}}O_{3.02}

wherein c is optional and therefrom a multi-layer capacitor was made by the same method as Example 1. Evaluation tests on various properties of the resultant capacitor were carried out by the same method as Example 1.

In the Table 2 below, there are shown a substituted amount (c) of Mn and each value of various properties.

As shown in the Table 2, the insulation resistivity can be increased by subsutituting part of the Cu component in the perovskite of the dielectric layer by Mn. However, as the content of Mn becomes over 85%, the temparature change ratio of capacitance becomes too large to meet the YB characteristics of the JIS. Therefore, such compositions are excluded from the present invention.

**Table 2**

| No. | Composition (°C) | Optimum Sintering Temperature (°C) | dielectric properties Δε/ε (20°C) | | | | |
|---|---|---|---|---|---|---|---|
| | | | ε | tanδ % | insulation resistivity 10¹²Ω cm | -25°C % | +85°C % |
| 1 | 0.0 | 940 | 3650 | 0.30 | 12 | -4 | -5 |
| 2 | 0.1 | 940 | 3850 | 0.25 | 20 | -5 | -7 |
| 3 | 0.3 | 940 | 4050 | 0.25 | 25 | -6 | -8 |
| 4 | 0.85 | 960 | 4150 | 0.20 | 30 | -8 | -9 |
| 5 # | 0.90 | 960 | 4300 | 0.20 | 35 | -11 | -14 |

| | | | | | | | |
|---|---|---|---|---|---|---|---|
| # : comparative example | | | | | | | |

### EXAMPLE 3

According to the same procedure as Example 1, a multi-layer capacitor was prepared.

The starting materials, viz. lead oxide(PbO), strontium carbonate(SrCO₃), barium carbonate(BaCO₃), zinc oxide(ZnO), niobium oxide(Nb₂O₅), titanium oxide(TiO₂), tantalum oxide(Ta₂O₃) and copper oxide(CuO), all chemically pure grade, were used. After compensated as to pure contents, they were measured in a amount to compose a substance represented by the following formula:

(2) Pb₁₋ₓ₊ₐMeₓ{(Zn_{1/3}Nb_{2/3})_{1-y-z}Ti_{y}(Cu_{b}Ta_{1-b})_{z}}O₃₊ₐ

wherein Me is at least one element selected from Sr and Ba; x, y, z, a and b may be optional values.

Various properties of the resultant capacitor were measured according to the same method and conditions, and each typical data thereof was recorded as an average value of good samples.

In the Table 3 below, there are shown: x, y, z, a and b values of the dielectric composition; optimum sintering temparature; dielectric constant of the dielectric layer at 20°C ; tanδ ; resistivity; and temparature change ratio of the dielectric constant.

As shown in the Table 3, the compositions outside the polygon A,B,C,D,E scope shown in Fig.2 were not suitable for ceramic capacitor materials since they lack at least one property of (1) a sintering temparature of below 1000°C, (2) a dielectric constant of above 2000, (3) a resistivity of above 10⁺¹²Ω cm and (4) a temparature coefficient of capacitance meeting the YB characteristics of the JIS. Then, the compositions are excluded from the scope of the present invention.

It is also taught by the data in the Table 3 that the sintering temparature can be lowered and the insulation resistivity can be increased by providing an excess content (a) of the A site of more than zero in the perovskite phase represented by the formula A₁₊ₐBO₃ of the dielectric layer.

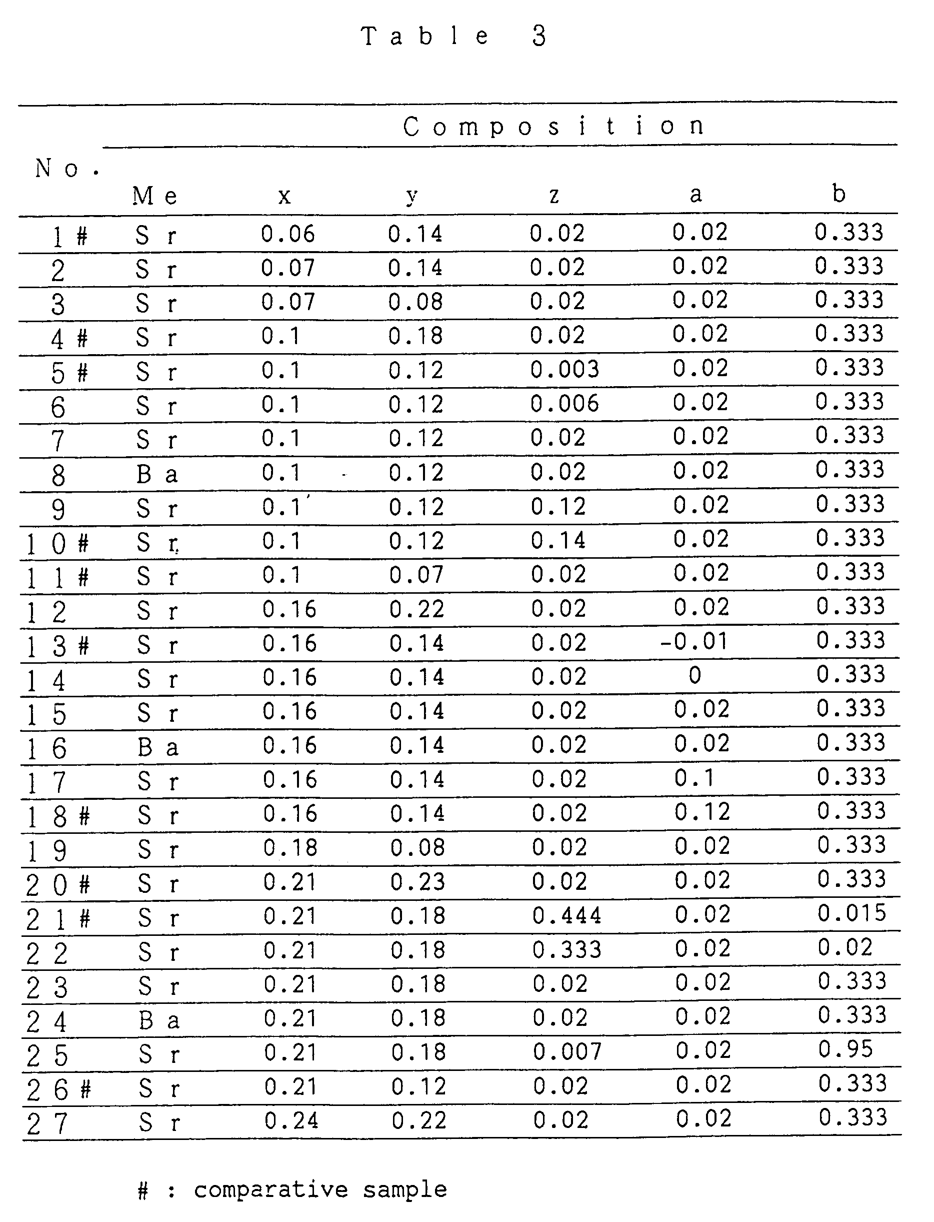

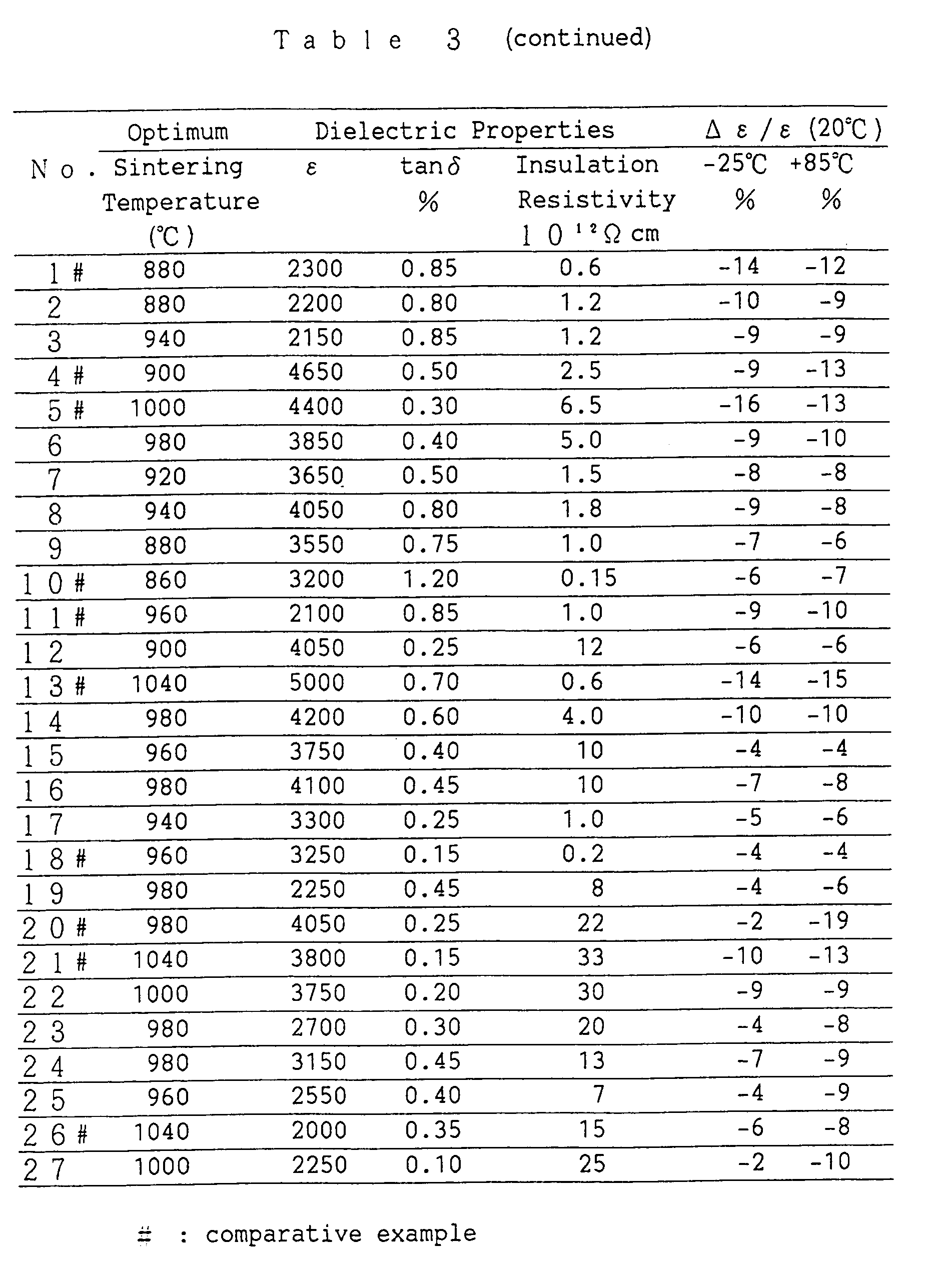

### EXAMPLE 4

The composition herein is characterized in that a part of the Cu component in the perovskite of the dielectric layer was substituted by Mn.

A dielectric powder was prepared to have a composition represented by the following formula:

(2)' Pb_{0.86}Sr_{O.16}{(Zn_{1/3}Nb_{2/3})_{0.83}Ti_{0.15} · ((Cu_{1-c}Mn_{c})_{1/3}Ta_{2/3})_{0.02}}O_{3.02}

wherein c is optional and therefrom a multi-layer capacitor was made by the same method as Example 3. Evaluation tests on various properties of the resultant capacitor were carried out by the same method as Example 1.

In the below Table 4, there are shown a substituted amount (c) of Mn and each value of various properties.

As shown in the Table 4, the insulation resistivity can be increased by subsutituting part of the Cu component in the perovskite of the dielectric layer by Mn. However, as the content of Mn becomes over 85%, the temparature change ratio of capacitance becomes too large to meet the YB characteristics of the JIS. Therefore, such compositions are excluded from the present invention.

**Table 4**

| No. | Composition (°C) | Optimum Sintering Temperature (°C) | Dielectric Properties Δε/ε (20°C) | | | | |
|---|---|---|---|---|---|---|---|
| | | | ε | tanδ % | Insulation Resistivity 10¹²Ω cm | -25°C % | +85°C % |
| 1 | 0.0 | 960 | 3750 | 0.40 | 10 | -4 | -4 |
| 2 | 0.1 | 960 | 3900 | 0.35 | 15 | -5 | -6 |
| 3 | 0.3 | 960 | 4150 | 0.30 | 18 | -7 | -8 |
| 4 | 0.85 | 980 | 4200 | 0.30 | 27 | -9 | -9 |
| 5 # | 0.90 | 1000 | 4400 | 0.25 | 30 | -12 | -15 |

| | | | | | | | |
|---|---|---|---|---|---|---|---|
| # : comparative example | | | | | | | |

### EXAMPLE 5

According to the same procedure as Example 1, a multi-layer capacitor was prepared.

The starting materials, viz. lead oxide(PbO), strontium carbonate(SrCO₃), barium carbonate(BaCO₃), zinc oxide(ZnO), niobium oxide(Nb₂O₅), titanium oxide(TiO₂), tungsten oxide(W₂O₃) and copper oxide(CuO), all chemically pure grade, were used. After compensated as to pure contents, they were measured in a amount to compose a substance represented by the following formula:

(3) Pb₁₋ₓ₊ₐMeₓ{(Zn_{1/3}Nb_{2/3})_{1-y-z}Ti_{y}(Cu_{b}W_{1-b})_{z}}O₃₊ₐ

wherein Me is at least one element selected from Sr and Ba; x, y, z, a and b may be optional values.

Various properties of the resultant capacitor were measured according to the same method and conditions, and each typical data thereof was recorded as an average value of good samples.

In the below Table 5, there are shown: x, y, z, a and b values of the dielectric composition; optimum sintering temparature; dielectric constant of the dielectric layer at 20°C; tanδ; resistivity; and temparature change ratio of the dielectric constant.

As shown in the Table 5, the compositions outside the polygon A,B,C,D,E scope shown in Fig.3 were not suitable for ceramic capacitor materials since they lack at least one property of (1) a sintering temparature of below 1000°C, (2) a dielectric constant of above 2000, (3) a resistivity of above 10⁺¹²Ω cm and (4) a temparature coefficient of capacitance meeting the YB characteristics of the JIS. Then the compositions are exclused from the scope of the present invention.

It is also taught by the data in the Table 5 that the sintering temparature can be lowered and the insulation resistivity can be increased by providing an excess content (a) of the A site of more than zero in the perovskite phase represented by the formula A₁₊ₐBO₃ of the dielectric layer.

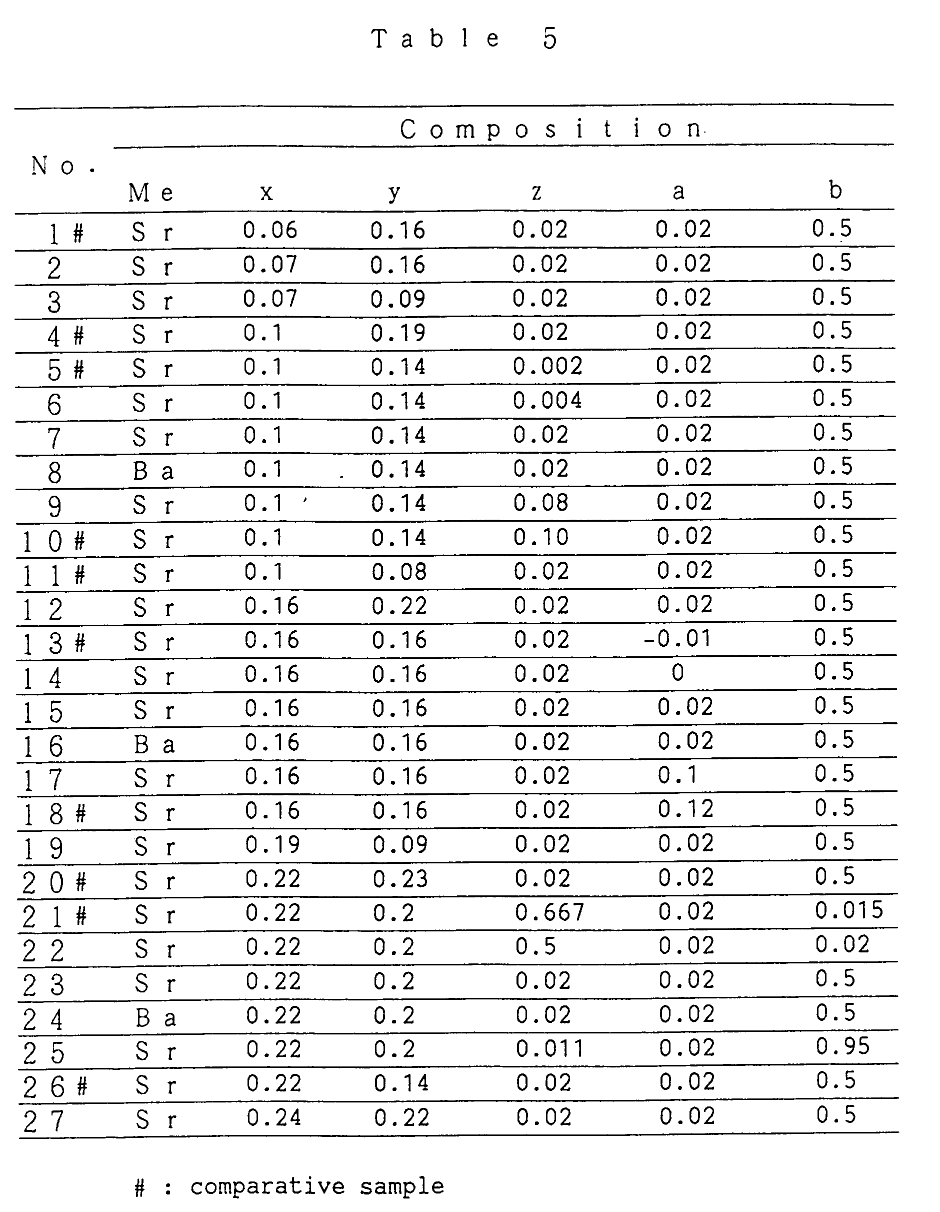

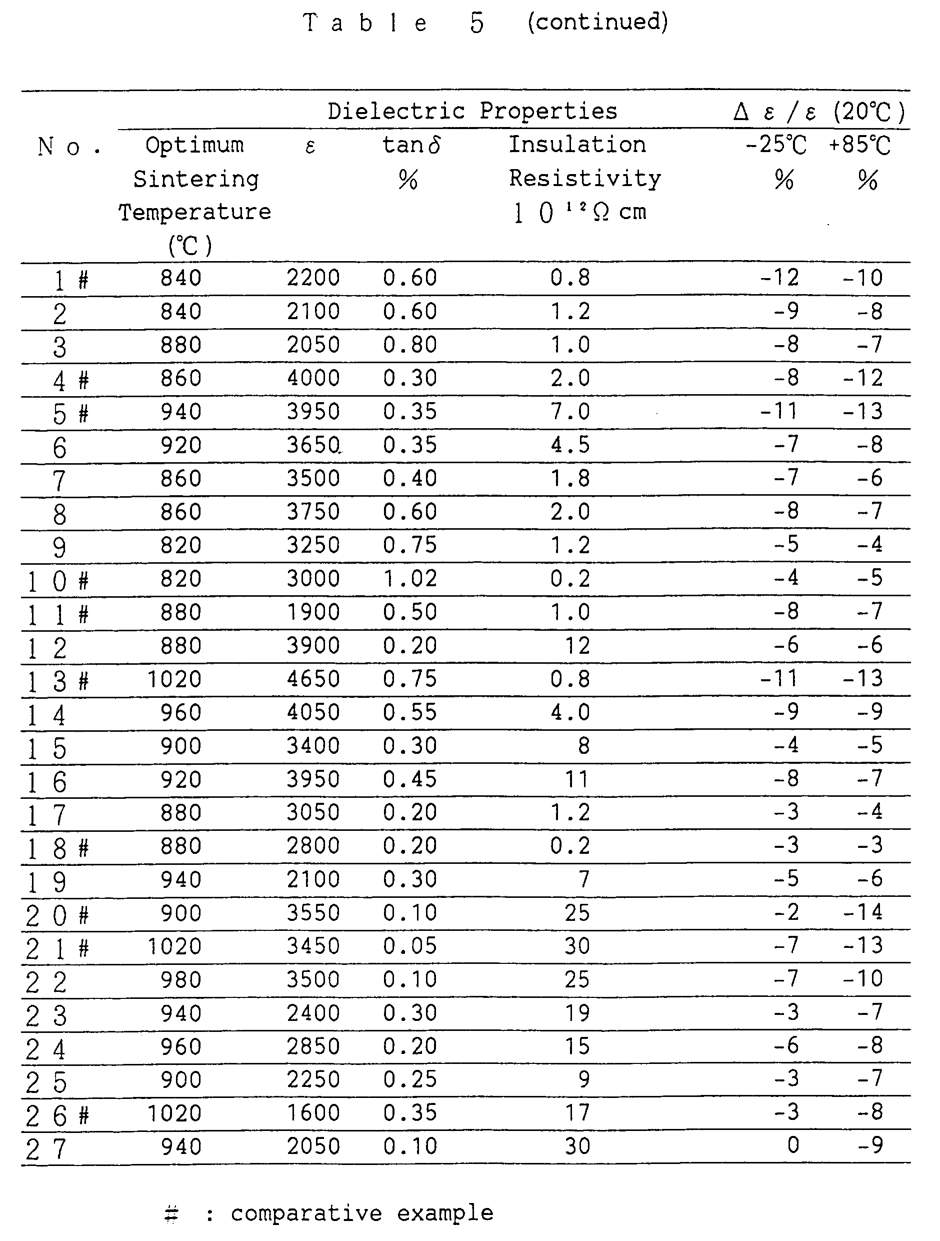

### EXAMPLE 6

The composition herein is characterized in that part of the Cu component in the perovskite of the dielectric layer was substituted by Mn.

A dielectric powder was prepared to have a composition represented by the following formula:

(3)' Pb_{0.86}Sr_{O.16}{(Zn_{1/3}Nb_{2/3})_{0.83}Ti_{0.15} · ((Cu_{1-c}Mn_{c})_{1/2}W_{1/2})_{0.02}}O_{3.02}

wherein c is optional and therefrom a multi-layer capacitor was made by the same method as Example 5. Evaluation tests on various properties of the resultant capacitor were carried out by the same method as Example 1.

In the below Table 6, there are shown a substituted amount (c) of Mn and each value of various properties.

As shown in the Table 6, the insulation resistivity can be increased by subsutituting part of the Cu component in the perovskite of the dielectric layer by Mn. However, as the content of Mn becomes over 85%, the temparature change ratio of capacitance becomes too large to meet the YB characteristics of the JIS. Therefore, such compositions are excluded from the present invention.

As apparent from the above description, by use of the multi-layer capacitor in accordance with the present invention the material costs for the electrodes are remarkably lowered, and superior properties can be obtained especially in a high frequency circuit. Further, the use of Pb based dielectric materials makes it possible to render dielectric layers thinner for multi-layer capacitors, so that there can be provided a small sized capacitor having a larger capacitance for replacement of conventional electrolytic capacitor. Furthermore, the temparature coefficient of capacitance sufficiently meets the YB characteristics of the JIS, so that its utilized circuit field can be expanded further.

**Table 6**

| No. | Composition (°C) | Optimum Sintering Temperature (°C) | Dielectric Properties Δε/ε (20°C) | | | | |
|---|---|---|---|---|---|---|---|
| | | | ε | tanδ % | Insulation Resistivity 10¹²Ω cm | -25°C % | +85°C % |
| 1 | 0.0 | 900 | 3400 | 0.30 | 8 | -4 | -5 |
| 2 | 0.1 | 900 | 3650 | 0.25 | 15 | -4 | -6 |
| 3 | 0.3 | 900 | 3800 | 0.25 | 20 | -5 | -8 |
| 4 | 0.85 | 920 | 3900 | 0.15 | 25 | -7 | -9 |
| 5 # | 0.90 | 920 | 4150 | 0.15 | 30 | -10 | -14 |

| | | | | | | | |
|---|---|---|---|---|---|---|---|
| # : comparative example | | | | | | | |

## Claims

1. Dielectric ceramic composition consisting essentially of one or more substances selected from substances represented by the following formulas:
(1) Pb₁₋ₓ₊ₐMeₓ{(Zn_{1/3}Nb_{2/3})_{1-y-z}Ti_{y}(Cu_{b}Nb_{1-b})_{z}}O₃₊ₐ
wherein Me is at least one element selected from Sr and Ba; x and y are within the polygon scope enclosed by 5 points A(x=0.07, y=0.15), B(x=0.07, y=0.07), C(x=0.16, y=0.07), D(x=0.24, y=0.22) and E(x=0.16, y=0.22); and O≦a≦0.1, 0.02≦b≦1.0, 0.002≦bz≦0.04;
(2) Pb₁₋ₓ₊ₐMeₓ{(Zn_{1/3}Nb_{2/3})_{1-y-z}Ti_{y}(Cu_{b}Ta_{1-b})_{z}}O₃₊ₐ
wherein Me is at least one element selected from Sr and Ba; x and y are with in the polygon scope enclosed by 5 points A(x=0.07, y=0.14), B(x=0.07, y=0.08), C(x=0.18, y=0.08), D(x=0.24, y=0.22) and E(x=0.16, y=0.22); and O≦a≦0.1, 0.02≦b≦1.0, 0.002≦bz≦0.04;
(3) Pb₁₋ₓ₋ₐMeₓ{(Zn_{1/3}Nb_{2/3})_{1-y-z}Ti_{y}(Cu_{b}W_{1-b})_{z}}O₃₊ₐ
wherein Me is at least one element selected from Sr and Ba; x and y are with in the polygon scope enclosed by 5 points A(x=0.07, y=0.16), B(x=0.07, y=0.09), C(x=0.19, y=0.09), D(x=0.24, y=0.22) and E(x=0.16, y=0.22); and O≦a≦0.1, 0.02≦b≦1.0, 0.002≦bz≦0.04.

2. Dielectric ceramic composition according to claim 1, wherein at most 85% of Cu atoms included therein are substituted by Mn atoms.

3. A multi layer ceramic capacitor principally made up of (a) internal electrode layers mainly containing Cu or Cu alloys and (b) dielectric layers mainly containing at least one ceramic substance selected from substances represented by the following formulas:
(1) Pb₁₋ₓ₊ₐMeₓ{(Zn_{1/3}Nb_{2/3})_{1-y-z}Ti_{y}(Cu_{b}Nb_{1-b})_{z}}O₃₊ₐ
wherein Me is at least one element selected from Sr and Ba; x and y is in the scope enclosed by 5 points A(x=0.07, y=0.15), B(x=0.07, y=0.07), C(x=0.16, y=0.07), D(x=0.24, y=0.22) and E(x=0.16, y=0.22); and O≦a≦0.1, 0.02≦b≦1.0, 0.002≦bz≦0.04;
(2) Pb₁₋ₓ₊ₐMeₓ{(Zn_{1/3}Nb_{2/3})_{1-y-z}Ti_{y}(Cu_{b}Ta_{1-b})_{z}}O₃₊ₐ
wherein Me is at least one element selected from Sr and Ba; x and y are with in the polygon scope enclosed by 5 points A(x=0.07, y=0.14), B(x=0.07, y=0.08), C(x=0.18, y=0.08), D(x=0.24, y=0.22) and E(x=0.16, y=0.22); and O≦a≦0.1, 0.02≦b≦1.0, 0.002≦bz≦0.04;
(3) Pb₁₋ₓ₊ₐMeₓ{(Zn_{1/3}Nb_{2/3})_{1-y-z}Ti_{y}(Cu_{b}W_{1-b})_{z}}O₃₊ₐ
wherein Me is at least one element selected from Sr and Ba; x and y is in the scope enclosed by 5 points A(x=0.07, y=0.16), B(x=0.07, y=0.09), C(x=0.19, y=0.09), D(x=0.24, y=0.22) and E(x=0.16, y=0.22); and O≦a≦0.1, 0.02≦b≦1.0, 0.002≦bz≦0.04.

4. A multi layer ceramic capacitor according to claim 3, wherein at most 85% of Cu atoms included in the dielectric layers are substituted by Mn atoms.

## Patentansprüche

1. Dielektrische Keramikzusammensetzung, bestehend im wesentlichen aus einer oder mehreren Substanzen, ausgewählt aus Substanzen, die durch die folgenden Formeln wiedergegeben werden:
(1) Pb₁₋ₓ₊ₐMeₓ{(Zn_{1/3}Nb_{2/3})_{1-y-z}Ti_{y}(Cu_{b}Nb_{1-b})_{z}}O₃₊ₐ,
wobei Me mindestens ein Element darstellt, ausgewählt aus Sr und Ba; und x und y innerhalb der Polygonfläche liegen, die eingeschlossen wird von den 5 Punkten A (x = 0,07, y = 0,15), B (x = 0,07, y = 0,07), C (x = 0,16, y = 0,07), D (x = 0,24, y = 0,22) und E (x = 0,16, y = 0,22); und wobei O ≦ a ≦ 0,1, 0,02 ≦ b ≦ 1,0, 0,002 ≦ bz ≦ 0,04;
(2) Pb₁₋ₓ₊ₐMeₓ{(Zn_{1/3}Nb_{2/3})_{1-y-z}Ti_{y}(Cu_{b}Ta_{1-b})_{z}}O₃₊ₐ,
wobei Me mindestens ein Element darstellt, ausgewählt aus Sr und Ba; und x und y innerhalb der Polygonfläche liegen, die eingeschlossen wird von den 5 Punkten A (x = 0,07, y = 0,14), B (x = 0,07, y = 0,08), C (x = 0,18, y = 0,08), D (x = 0,24, y = 0,22) und E (x = 0,16, y = 0,22); und wobei O ≦ a ≦ 0,1, 0,02 ≦ b ≦ 1,0, 0,002 ≦ bz ≦ 0,04;
(3) Pb₁₋ₓ₊ₐMeₓ{(Zn_{1/3}Nb_{2/3})_{1-y-z}Ti_{y}(Cu_{b}W_{1-b})_{z}}O₃₊ₐ,
wobei Me mindestens ein Element darstellt, ausgewählt aus Sr und Ba; und x und y innerhalb der Polygonfläche liegen, die eingeschlossen wird von den 5 Punkten A (x = 0,07, y = 0,16), B (x = 0,07, y = 0,09), C (x = 0,19, y = 0,09), D (x = 0,24, y = 0,22) und E (x = 0,16, y = 0,22); und wobei O ≦ a ≦ 0,1, 0,02 ≦ b ≦ 1,0, 0,002 ≦ bz ≦ 0,04.

2. Dielektrische Keramikzusammensetzung nach Anspruch 1, wobei höchstens 85 % der enthaltenen Cu-Atome durch Mn-Atome substituiert sind.

3. Vielschicht-Keramikkondensator, im wesentlichen aufgebaut aus (a) inneren Elektrodenschichten, die hauptsächlich Cu oder Cu-Legierungen enthalten und (b) dielektrischen Schichten, die hauptsächlich mindestens eine Keramikverbindung enthalten, ausgewählt aus Substanzen, die durch die folgenden Formeln wiedergegeben werden:
(1) Pb₁₋ₓ₊ₐMeₓ{(Zn_{1/3}Nb_{2/3})_{1-y-z}Ti_{y}(Cu_{b}Nb_{1-b})_{z}}O₃₊ₐ,
wobei Me mindestens ein Element darstellt, ausgewählt aus Sr und Ba; und x und y innerhalb der Polygonfläche liegen, die eingeschlossen wird von den 5 Punkten A (x = 0,07, y = 0,15), B (x = 0,07, y = 0,07), C (x = 0,16, y = 0,07), D (x = 0,24, y = 0,22) und E (x = 0,16, y = 0,22); und wobei O ≦ a ≦ 0,1, 0,02 ≦ b ≦ 1,0, 0,002 ≦ bz ≦ 0,04;
(2) Pb₁₋ₓ₊ₐMeₓ{(Zn_{1/3}Nb_{2/3})_{1-y-z}Ti_{y}(Cu_{b}Ta_{1-b})_{z}}O₃₊ₐ,
wobei Me mindestens ein Element darstellt, ausgewählt aus Sr und Ba; und x und y innerhalb der Polygonfläche liegen, die eingeschlossen wird von den 5 Punkten A (x = 0,07, y = 0,14), B (x = 0,07, y = 0,08), C (x = 0,18, y = 0,08), D (x = 0,24, y = 0,22) und E (x = 0,16, y = 0,22); und wobei O ≦ a ≦ 0,1, 0,02 ≦ b ≦ 1,0, 0,002 ≦ bz ≦ 0,04;
(
3) Pb₁₋ₓ₊ₐMeₓ{(Zn_{1/3}Nb_{2/3})_{1-y-z}Ti_{y}(Cu_{b}W_{1-b})_{z}}O₃₊ₐ,
wobei Me mindestens ein Element darstellt, ausgewählt aus Sr und Ba; und x und y innerhalb der Polygonfläche liegen, die eingeschlossen wird von den 5 Punkten A (x = 0,07, y = 0,16), B (x = 0,07, y = 0,09), C (x = 0,19, y = 0,09), D (x = 0,24, y = 0,22) und E (x = 0,16, y = 0,22); und wobei O ≦ a ≦ 0,1, 0,02 ≦ b ≦ 1,0, 0,002 ≦ bz ≦ 0,04.

4. Vielschicht-Keramikkondensator nach Anspruch 3, wobei höchstens 85 % der enthaltenen Cu-Atome durch Mn-Atome substituiert sind.

## Revendications

1. Composition céramique diélectrique consistant essentiellement en une ou plusieurs substances sélectionnées parmi celles représentées par les formules suivantes :
(1) Pb₁₋ₓ₊ₐMeₓ{(Zn_{1/3}Nb_{2/3})_{1-y-z}Ti_{y}(Cu_{b}Nb_{1-b})_{z}}O₃₊ₐ
dans laquelle Me est au moins un élément choisi parmi Sr et Ba ; x et y sont dans le domaine polygonal délimité par 5 points A (x = 0,07, y = 0,15), B (x = 0,07, y = 0,07), C ( x = 0,16, y = 0,07), D (x = 0,24, y = 0,22) et E (x = 0,16, y = 0,22) ; et 0 ≦ a ≦ 0,1, 0,02 ≦ b ≦ 1,0, 0,002 ≦ bz ≦ 0,04 ;
(2) Pb₁₋ₓ₊ₐMeₓ{(Zn_{1/3}Nb_{2/3})_{1-y-z}Ti_{y}(Cu_{b}Ta_{1-b})_{z}}O₃₊ₐ
dans laquelle Me est au moins un élément choisi parmi Sr et Ba ; x et y sont dans le domaine polygonal délimité par 5 points A (x = 0,07, y = 0,14), B (x = 0,07, y = 0,08), C (x = 0,18, y = 0,08), D (x = 0,24, y = 0,22) et E (x = 0,16, y = 0,22) ; et 0 ≦ a ≦ 0,1, 0,02 ≦ b ≦ 1,0, 0,002 ≦ bz ≦ 0,04 ;
(3) Pb₁₋ₓ₊ₐMeₓ{(Zn_{1/3}Nb_{2/3})_{1-y-z}Ti_{y}(Cu_{b}W_{1-b})_{z}}O₃₊ₐ
dans laquelle Me est au moins un élément choisi parmi Sr et Ba ; x et y sont dans le domaine polygonal délimité par 5 points A (x = 0,07, y = 0,16), B (x = 0,07, y = 0,09), C (x = 0,19, y = 0,09), D (x = 0,24, y = 0,22) et E (x = 0,16, y = 0,22) ; et 0 ≦ a ≦ 0,1, 0,02 ≦ b ≦ 1,0, 0,002 ≦ bz ≦ 0,04.

2. Composition de céramique diélectrique selon la revendication 1, dans le contenu de laquelle au plus 85 % des atomes de Cu sont remplacés par des atomes de Mn.

3. Condensateur en céramique à plusieurs couches constitué principalement par (a) des couches internes d'électrodes contenant surtout du cuivre ou des alliages de cuivre et (b) des couches diélectriques contenant surtout au moins une substance céramique sélectionnée parmi les substances représentées par les formules suivantes :
(1) Pb₁₋ₓ₊ₐMeₓ{(Zn_{1/3}Nb_{2/3})_{1-y-z}Ti_{y}(Cu_{b}Nb_{1-b})_{z}}O₃₊ₐ
dans laquelle Me est au moins un élément choisi parmi Sr et Ba ; x et y sont dans le domaine polygonal délimité par 5 points A (x = 0,07, y = 0,15), B (x = 0,07, y = 0,07), C (x = 0,16, y = 0,07), D (x = 0,24, y = 0,22) et E (x = 0,16, y = 0,22) ; et 0 ≦ a ≦ 0,1, 0,02 ≦ b ≦ 1,0, 0,002 ≦ bz ≦ 0,04 ;
(2) Pb₁₋ₓ₊ₐMeₓ{(Zn_{1/3}Nb_{2/3})_{1-y-z}Ti_{y}(Cu_{b}Ta_{1-b})_{z}}O₃₊ₐ
dans laquelle Me est au moins un élément choisi parmi Sr et Ba ; x et y sont dans le domaine polygonal délimité par 5 points A (x = 0,07, y = 0,14), B (x = 0,07, y = 0,08), C (x = 0,18, y = 0.08), D (x = 0,24, y = 0,22) et E (x = 0,16, y = 0,22) ; et 0 ≦ a ≦ 0,1, 0,02 ≦ b ≦ 1,0, 0,002 ≦ bz ≦ 0,04 ;
(3) Pb₁₋ₓ₊ₐMeₓ{(Zn_{1/3}Nb_{2/3})_{1-y-z}Ti_{y}(Cu_{b}W_{1-b})_{z}}O₃₊ₐ
dans laquelle Me est au moins un élément choisi parmi Sr et Ba x et y sont dans le domaine polygonal délimite par 5 points A (x = 0,07, y = 0,16), B (x = 0,07, y = 0,09), C (x = 0,19, y = 0,09), D (x = 0,24, y = 0,22) et E (x = 0,16, y = 0,22) ; et 0 ≦ a ≦ 0,1, 0,02 ≦ b ≦ 1,0, 0,002 ≦ bz ≦ 0,04.

4. Condensateur en céramique à plusieurs couches selon la revendication 3, dans lequel au plus 85 % des atomes de Cu contenus dans les couches diélectriques sont remplacés par des atomes de Mn.
